# EUROPEAN PATENT SPECIFICATION

(11) **EP 3 120 722 B1**
(45) Date of publication and mention of the grant of the patent: **20.05.2020**
(21) Application number: 16180596.5
(22) Date of filing: 21.07.2016
(51) Int. Cl.: A43B 23/08, A43B 23/17, B29D 35/12, A43B 23/02

(54) **THERMOFORMABLE POLYAMIDE IONOMER MATERIAL FOR HEEL COUNTER AND TOE PUFF**
THERMOFORMBARES POLYAMIDIONOMERMATERIAL FÜR FERSENKAPPE UND SCHUHSPITZE
MATÉRIAU IONOMÈRE DE POLYAMIDE THERMOFORMABLE POUR CONTREFORT DE TALON ET LES ORTEILS

(30) Priority: 24.07.2015 US 201562196373 P
(43) Date of publication of application: 25.01.2017
(73) Proprietor: Performance Materials NA, Inc., Midland, Michigan 48674 (US)
(72) Inventor: RASPAIL, Vincent, 01210 Ferney-Voltaire (FR)
(74) Representative: Boult Wade Tennant LLP

(56) References cited:
- WO-A1-97/19609
- US-A- 2 714 734
- US-A- 3 427 733
- US-A- 4 862 606
- US-A1- 2004 235 586
- US-A1- 2005 124 741
- US-A1- 2012 027 983
- US-A1- 2012 028 062
- US-A1- 2012 202 940

## Description

### FIELD OF THE INVENTION

The present invention relates to the field of shoe stiffener for footwear and in particular to shoe stiffener such as heel counter and toe puff.

### BACKGROUND OF THE INVENTION

Generally, footwear contains shoe stiffener such as heel counter and/or toe puff. Both toe puff and heel counter are generally made of polymeric materials that are both stiff and resilient in order to provide strength and protection in the toe and heel area of the footwear. Polymeric materials are also used because they can be shaped into the desired structure and hence provide shape support for footwear construction.

An ionomer such as Surlyn® which is commercially available from E. I. du Pont de Nemours and Company, Wilmington, Delaware, USA (DuPont), is a good candidate to be used as a shoe stiffener. Surlyn® is a resilient material, and this property allows the shoe to recover its shape even after having being deformed. Surlyn® is also a polymeric material that is thermoformable at a temperature around 70-80°C while having a long open-time meaning that the material can be re-shaped for a certain period after being heated. The thermoformability of the polymeric materials is desired when making shoe stiffener since it will facilitate considerably the molding or shaping of the material into the desired structure. However, since the molding or shaping is usually made in-situ, i.e. in the presence of other footwear components that could be sensitive to heat, the temperature at which the polymeric material should be thermoformable should not be higher than 100°C.

Also, Surlyn® itself may not be rigid enough in order to be used in shoe stiffener as such. Increasing the stiffness of Surlyn® while keeping thermoformability at a temperature lower than 100°C, will allow the material to be used in shoe stiffeners and in particular as a heel counter. Potentially, increasing the stiffness of Surlyn® could also allow to reduce the thickness of shoes stiffener and resulting in weight decrease of the shoe stiffener and hence the overall footwear.

Therefore, there is a need for shoe stiffener that are thermoformable at a temperature lower than 100°C and that offer high mechanical properties such as rigidity, resilience, impact resistance etc.

Document US2005/0124741 A1 relates to ionomers compositions containing organic acid salts, such as fatty acid salts for various uses and foresees the possibility to optionally include a thermoplastic resin such as a polyamide, or to optionally include an additive such as a filler, but does not hint to any specific composition.

### SUMMARY OF THE INVENTION

Described herein is a shoe stiffener according to claim 1, a method of manufacturing the same according to claim 8 and an article of footwear comprising the same according to claim 12. Preferred embodiments are described in the dependent claims.

Preferably, the shoe stiffener of the present invention comprises a thermoformable polymer composition comprising a polyamide resin and an ionomer resin.

Also preferably, the shoe stiffener of the present invention comprises a thermoformable polymer composition which is thermoformable at a temperature below or equal to 100°C.

In the preferred embodiment, the thermoformable polymer composition in the shoe stiffener of the present invention comprises from 3 to 45 weight percent of polyamide, the weight percent being based on the total weight of thermoformable polymer composition.

In the preferred embodiment, the thermoformable polymer composition in the shoe stiffener of the present invention comprises from 3 to 45 weight percent of polyamide resin and from 55 to 97% of an ionomer resin, the weight percent being based on the total weight of thermoformable polymer composition.

In the shoe stiffener of the present invention, the fibrous material may be impregnated or partially impregnated with the thermoformable polymer composition.

Preferably, the fibrous material is a non-woven fabric.

Also preferably, the ionomer resin, in the shoe stiffener of the present invention, is a copolymer or ethylene and between 10 and 20 weight percent of methacrylic acid neutralized with between 0.5 and 99% of metal ions selected from Zn, Na, Li or K or a mixture thereof.

In one embodiment, the shoe stiffener of the invention is a heel counter.

In another embodiment, the shoe stiffener of the invention is a toe puff.

Also disclosed herein is a method for making a shoe stiffener according to the invention, the method comprising the steps of:
(a) providing a fibrous material
(b) providing a thermoformable polymer composition
(c) extruding the thermoformable polymer composition onto the fibrous material to obtain a composite sheet.
(d) cutting the composite sheet of step (c) into the desired shape and size to obtain a shoe stiffener.

Optionally, the method may further comprise a step of applying heat and pressure to the show stiffener of step (d) to thermoform the shoe stiffener into the desired shape. Preferably, the shoe stiffener is heated at a temperature below or equal to 100°C.

In a preferred embodiment, the thermoformable polymer composition is extruded by extrusion coating onto the fibrous material to obtain a composite sheet.

Also disclosed herein is a footwear comprising the shoe stiffener according to the present invention.

### DETAILED DESCRIPTION

### Definitions

As used herein, the term "a" refers to one as well as to at least one and is not an article that necessarily limits its referent noun to the singular.

As used herein, the terms "about" and "at or about" are intended to mean that the amount or value in question may be the value designated or some other value about the same. The phrase is intended to convey that similar values promote equivalent results or effects according to the invention.

As used herein, the term "acrylate" means an ester of acrylic acid with an alkyl group. Preferred in the invention are acrylates with alkyl groups having 1 to 4 carbon atoms.

As used herein, the term, the term "(meth)acrylic acid" refers to methacrylic acid and/or acrylic acid, inclusively. Likewise, the term "(meth)acrylate" means methacrylate and/or acrylate and "poly(meth)acrylate" means polymers derived from the polymerization of either or a mixture of both corresponding type of monomers.

As used herein, the term "terpolymer" means that the copolymer has at least three different comonomers.

As used herein, the term "copolymer" refers to polymers comprising copolymerized units resulting from copolymerization of two or more comonomers. In this connection, a copolymer may be described herein with reference to its constituent comonomers or to the amounts of its constituent comonomers, for example "a copolymer comprising ethylene and 18 weight percent of acrylic acid", or a similar description. Such a description may be considered informal in that it does not refer to the comonomers as copolymerized units; in that it does not include a conventional nomenclature for the copolymer, for example International Union of Pure and Applied Chemistry (IUPAC) nomenclature; in that it does not use product-by-process terminology; or for another reason. As used herein, however, a description of a copolymer with reference to its constituent comonomers or to the amounts of its constituent comonomers means that the copolymer contains copolymerized units (in the specified amounts when specified) of the specified comonomers. It follows as a corollary that a copolymer is not the product of a reaction mixture containing given comonomers in given amounts, unless expressly stated in limited circumstances to be such. The term "copolymer" may refer to polymers that consist essentially of copolymerized units of two different monomers (a dipolymer), or that consist essentially of more than two different monomers (a terpolymer consisting essentially of three different comonomers, a tetrapolymer consisting essentially of four different comonomers, etc.).

The term "acid copolymer" refers to a polymer comprising copolymerized units of an α-olefin, an α,β-ethylenically unsaturated carboxylic acid, and optionally other suitable comonomer(s), such as an α,β-ethylenically unsaturated carboxylic acid ester.

The term "ionomer" refers to a polymer that is produced by partially or fully neutralizing an acid copolymer as described above.

The shoe stiffener of the present invention comprises:
a) a thermoformable polymer composition and,
b) a fibrous material.

Preferably, the shoe stiffener of the present invention comprises a thermoformable polymer composition comprising a polyamide resin and an ionomer resin. The thermoformable composition can be a blend of a polyamide resin and an ionomer resin or can be an intimate mixture of an ionomer resin and a blend of an ionomer resin and a polyamide resin as disclosed in WO 2012/109318 or in US2013/0283642.

The ionomer resin of the present invention is a polymer that is produced by partially or fully neutralizing an acid copolymer, such as ethylene acid copolymers, as described below.

Suitable ethylene acid copolymers and ionomers are described in U.S. Patent No. 7,641,965, issued to Bennison et al., for example. Briefly, however, the ethylene acid copolymer comprises copolymerized units of an α-olefin having from 2 to 10 carbon atoms and about 8 to about 30 weight percent, preferably about 15 to about 30 weight percent, more preferably about 20 to about 30 weight percent, yet more preferably about 20 to about 25 weight percent, or still more preferably about 21 to about 23 weight percent of copolymerized units of an α,β-ethylenically unsaturated carboxylic acid having 3 to 8 carbon atoms. The weight percentage is based on the total weight of the ethylene acid copolymer. Preferably, the α-olefin comprises ethylene; more preferably, the α-olefin consists essentially of ethylene. Also preferably, the α,β-ethylenically unsaturated carboxylic acid comprises acrylic acid, methacrylic acid, or a combination of acrylic acid and methacrylic acid. More preferably, the α,β-ethylenically unsaturated carboxylic acid consists essentially of acrylic acid, methacrylic acid, or a combination of acrylic acid and methacrylic acid.

The ethylene acid copolymers may further comprise copolymerized units of other comonomer(s), such as unsaturated carboxylic acids having 2 to 10, or preferably 3 to 8 carbon atoms or derivatives thereof. Suitable acid derivatives include acid anhydrides, amides, and esters. Esters are preferred derivatives. Preferably the esters are α,β-ethylenically unsaturated carboxylic acid ester comonomers and include, but are not limited to, methyl acrylate, ethyl acrylate, isopropyl acrylate, butyl acrylate and combinations thereof.

The ethylene acid copolymers may be synthesized by any suitable polymerization process. For example, the ethylene acid copolymers may be polymerized as described in U.S. Patent Nos. 3,404,134; 5,028,674; 6,500,888; and 6,518,365.

Preferably, the ethylene acid copolymer has a melt index (MI) of about 60 g/10 min or less, more preferably about 45 g/10 min or less, yet more preferably about 30 g/10 min or less, or yet more preferably about 25 g/10 min or less, or still more preferably about 10 g/10 min or less, as measured by ASTM method D1238 at 190°C and 2.16 kg.

Some suitable ethylene acid copolymer resins are commercially available from E.I. du Pont de Nemours and Company of Wilmington, DE ("DuPont"), under the trademark Nucrel®.

To obtain the ionomers, at least a portion of the carboxylic acid moieties of the ethylene acid copolymers is neutralized to form carboxylate groups. Preferably about 5 to about 90 %, more preferably about 10 to about 50 %, yet more preferably about 20 to about 50 %, or still more preferably about 20 to about 35 % of the carboxylic acid groups are neutralized, based on the total carboxylic acid content of the ethylene acid copolymers. An example of a suitable procedure for neutralizing the ethylene acid copolymers is also described in U.S. Patent No. 3,404,134.

The ionomers comprise cations as counterions to the carboxylate anions. Suitable cations include any positively charged species that is stable under the conditions in which the ionomer composition is synthesized, processed and used. Preferably, the cations are metal cations that may be monovalent, divalent, trivalent or multivalent. Combinations of two or more cations that may have different valencies, for example mixtures of Na+ and Zn2+ or mixtures of NH4+ and K+, are also suitable. The cations are more preferably monovalent or divalent metal ions. Still more preferably, the metal ions are selected from the group consisting of ions of sodium, lithium, magnesium, zinc, and potassium and combinations of two or more thereof. Still more preferably, the metal ions are selected from the group consisting of ions of sodium, ions of zinc and combinations thereof. Still more preferably, the metal ions comprise or consist essentially of sodium ions.

The ionomer preferably has a MI of about 13 g/10 min or less, more preferably about 5 g/10 min or less, or still more preferably about 3 g/10 min or less, about 1.0 g/10 min or less, about 0.5 g/10 min or less, about 0.2 g/10 min or less, or about 0.1 g/10 min or less, as measured by ASTM method D1238 at 190°C and 2.16 kg. The ionomer also preferably has a flexural modulus greater than about 40,000 psi (276 MPa), more preferably greater than about 50,000 psi (345 MPa), or still more preferably greater than about 60,000 psi (414 MPa), as measured by ASTM method D790 (Procedure A).

Some suitable ionomeric resins are commercially available from DuPont, under the trademarks Surlyn® resins.

Suitable polyamides may be chosen from semi-aromatic, aliphatic polyamides, and blends thereof having a melting temperature of from 150 to 330°C.

The polyamide may be a fully aliphatic polyamide. Fully aliphatic polyamide resins may be formed from aliphatic and alicyclic monomers such as diamines, dicarboxylic acids, lactams, aminocarboxylic acids, and their reactive equivalents. A suitable aminocarboxylic acid includes 11-aminododecanoic acid. In the context of this invention, the term "fully aliphatic polyamide resin" also refers to copolymers derived from two or more such monomers and blends of two or more fully aliphatic polyamide resins. Linear, branched, and cyclic monomers may be used.

Carboxylic acid monomers comprised in fully aliphatic polyamide resins may include, but are not limited to, aliphatic carboxylic acids, such as for example adipic acid (C6), pimelic acid (C7), suberic acid (C8), azelaic acid (C9), sebacic acid (C10), dodecanedioic acid (C12) and tetradecanedioic acid (C14). Diamines can be chosen among diamines having four or more carbon atoms, including, but not limited to tetramethylene diamine, hexamethylene diamine, octamethylene diamine, decamethylene diamine, 2-methylpentamethylene diamine, 2-ethyltetramethylene diamine, 2-methyloctamethylene diamine; trimethylhexamethylene diamine and/or mixtures thereof. Suitable examples of fully aliphatic polyamide resins include PA6; PA6,6; PA4,6; PA6,10; PA6,12; PA6,14; P 6,13; PA 6,15; PA6,16; PA11; PA 12; PA10; PA 9,12; PA9,13; PA9,14; PA9,15; P 6,16; PA9,36; PA10,10; PA10,12; PA10,13; PA10,14; PA12,10; PA12,12; PA12,13; 12,14 and copolymers and blends of the same.

Preferred examples of fully aliphatic polyamide resins described herein include PA6, PA11, PA12, PA4,6, PA6,6, PA,10; PA6,12; PA10,10 and copolymers and blends of the same.

The thermoformable polymer composition in the shoe stiffener of the present invention comprises from 3 to 45 weight percent of a polyamide resin, more preferably from 5 to 40 weight percent of a polyamide resin, the weight percent being based on the total weight of the thermoformable composition. The thermoformable polymer composition of the present invention comprises from 3 to 45 weight percent of a polyamide resin and from 55 to 97 weight percent of an ionomer resin, the weight percent being based on the total weight of the thermoformable composition.

The polymer composition of the present invention is thermoformable meaning that it can be shaped using heat and pressure, the polymer composition being in the solid state as opposed of being in the molten state. Preferably, the polymer composition is thermoformable at a temperature equal or lower than 100°C, even more preferably at a temperature equal to or lower than 80°C. In addition, after being thermoformed, meaning that the polymer composition is shaped with heat and pressure, the polymer composition has to exhibit good shape retention characteristics. After release of the heat and pressure, the polymer composition needs to retain the shape given through thermoforming, preferentially for its life time or even more preferentially for the lifetime of the footwear. This property is called shape deformation retention.

A fibrous material is also used in the shoe stiffener of the present invention. The fibrous material can be fully or partially impregnated with the thermoformable polymer composition of the present invention.

As used herein, the term "fibrous material" means a material that is any suitable mat, fabric, or web form known to those skilled in the art. The fibers or strands used to form the fibrous material are interconnected (i.e. at least one fiber or strand is touching at least one other fiber or strand to form a continuous material) or touching each other so that a continuous mat, web or similar structure is formed.

The fibrous material is preferably selected from woven or non-woven structures (e.g., mats, felts, fabrics and webs) textiles, fibrous battings, a mixture of two or more materials, and combinations thereof. Non-woven structures can be selected from random fiber orientation or aligned fibrous structures. Examples of random fiber orientation include without limitation material which can be in the form of a mat, a needled mat or a felt. Examples of aligned fibrous structures include without limitation unidirectional fiber strands, bidirectional strands, multidirectional strands, multi-axial textiles. Textiles can be selected from woven forms, knits, braids and combinations thereof.

As used herein, the term "a fibrous material being impregnated with a thermoformable polymer composition" means that the thermoformable polymer composition encapsulates and embeds the fibrous material so as to form an interpenetrating network of fibrous material substantially surrounded by the thermoformable polymer composition. For purposes herein, the term "fiber" is defined as a macroscopically homogeneous body having a high ratio of length to width across its cross-sectional area perpendicular to its length. The fiber cross section can be any shape, but is typically round or oval shaped. The fibrous material may be made of any suitable material or a mixture of materials provided that the material or the mixture of materials withstand the processing conditions used during the impregnation by the thermoformable polymer composition.

Preferably, the fibrous material comprises natural fibers, glass fibers, carbon fibers, aramid fibers, graphite fibers, metal fibers, ceramic fibers, or mixtures thereof; more preferably, the fibrous material comprises glass fibers, carbon fibers, aramid fibers, natural fibers or mixtures thereof; and still more preferably, the fibrous material comprises natural fibers. By natural fiber, it is meant any material of plant origin or of animal origin. When used, the natural fibers are preferably derived from vegetable sources such as for example from seed hair (e.g. cotton), stem plants (e.g. hemp, flax, bamboo; both bast and core fibers), leaf plants (e.g. sisal and abaca), agricultural fibers (e.g., cereal straw, corn cobs, rice hulls and coconut hair) or lignocellulosic fiber (e.g. wood, wood fibers, wood flour, paper and wood-related materials). As mentioned above, more than one fibrous materials can be used. Preferably, the fibrous material is selected non-woven fabric such as cotton, polyester, nylon or Tyvek®.

Also disclosed herein is a method for making a shoe stiffener, the method comprises the steps of:
(a) providing a fibrous material
(b) providing a thermoformable polymer composition
(c) extruding the thermoformable polymer composition onto the fibrous material to obtain a composite sheet.
(d) cutting the composite sheet of step (c) into the desired shape and size to obtain a shoe stiffener.

Optionally, the method of the present invention can further comprise the step of applying heat and pressure to the show stiffener of step (d) to thermoform the shoe stiffener into the desired shape.

The thermoformable polymer composition of the present invention is made through mixing process known by the skilled person in the art. Preferentially, it is done in a twin screw extruder at a temperature higher than 220°C in order to ensure homogeneity of the compound. The composite structure, i.e. the fibrous material being impregnated with the thermoformable polymer composition, may be prepared by extrusion coating of the thermoformable polymer composition onto the fibrous material. Preferably the fibrous material is a non-woven fabric such as coton, polyester, nylon, Tyvek®, or a woven fabric such as those made with aramid fibers and commercially available from DuPont, under the trademarks Nomex® and Kevlar®. Preferentially, the extrusion coating machine will have three extruders allowing to coat three layers on the substrate. Different layer would be useful to control precisely some properties including but not limited : flexibility, adhesion, thermoformability...These layers can be different or identical and including other type of polymers (EVA, PE, SBS...). In the case of different layers at least one layer will be based on the thermoformable polymer composition comprising from 3 to 45 weight percent of polyamide resin and from 55 to 97 weight percent of an ionomer resin, the weight percent being based on the total weight of thermoformable polymer composition. The polymers can be virgin or recycled. A recycled polymer is described as that is not in its original form anymore. Usually waste, it has been processed (molten/fused) at least once and is formulated (color, additives...). Recycled resin is sorted, cleaned, milled into pellets or chips (called recycled polymer) that can be reused/ re-melted.

Thanks to extrusion coating process, the fibrous material is impregnated or partially impregnated with the thermoformable polymer composition. Additionally the external side of the fibrous material can be coated with an adhesive like a hot melt, an aqueous dispersion based adhesive, a solvent based adhesive which will help to maintain the stiffener in place in the shoe. Shoe stiffener can now be cut and skived from the composite plaque. Shape of the stiffener will depend of its location (toe puff or heel counter) in the shoe. The cut piece will then be heated in an oven at a temperature lower than 100°C. It will then be taken out of the oven and thermoformed under a press (optionally under heat) into the desired shape and placed into the shoe and adjusted.

### EXAMPLES

The invention is further illustrated by certain embodiments in the examples below which provide greater detail for the compositions, uses and processes described herein.

The following materials were used to prepare the thermoformable polymer compositions and shoe stiffeners described herein as shown in table1.

Dupont Surlyn® PC2000 is a highly sodium neutralized acrylic acid copolymer used in cosmetic application.
- d= 0.97 g/cm3
- Melting point = 84°C
- Vicat softening point = 53°C
- MFI= 4.5 10g/min at 190°C/2.16kg

DuPont Surlyn® AE1028 is a highly sodium neutralized acrylic acid copolymer.
- d= 0.95 g/cm3
- Melting point = 83°C
- Vicat softening point = 63°C
- MFI= 1.8 10g/min at 190°C/2.16kg

Ultramid® B27 is an extrusion polyamide 6 with high relative viscosity
- d=1.13g/cm3
- Melting point = 220°C
- RV=2.7

Fibrous material used in the examples is a twill fabric made from polyamide.

The thermoformable polymer compositions have been produced on a 24mm TWIN SCREW "PRISM" extruder.

From these thermoformable polymer compositions, are produced 75mm diameter circle for 1mm thick. The circles are then laminated onto the fibrous material to make the shoe stiffener on a press from COLLIN® at 115°C for 3min.

### TEST 1

Mechanical properties of the compounds are measured on a Zwick® following the norm DIN EN ISO527-1 at 100mm/min.

The examples show that it is possible to increase the rigidity of the compound by increasing the amount of polyamide resin. On the other hand, if the level of polyamide resin is lower than 40 weight percent, thermoforing can take place at a temperature of 80°C. Results are provided in table 1.

### TEST 2

Thermoformability tests are performed under a pressure of 7.7kg at 80°C for 1min in order to create a "dome" shape. A measurement of the domes diameter is done after thermoforming and after one week to verify the shape retention. Results are provided in table 2.

**Table 1**

| | **A** | **B** | **C** | **D** | **E** | **F** | **G** | **H** | **I** | **J** |
|---|---|---|---|---|---|---|---|---|---|---|
| | **%** | **%** | **%** | **%** | **%** | **%** | **%** | **%** | **%** | **%** |
| **Ultramid B27** | 10 | 20 | 30 | 40 | 60 | 10 | 20 | 30 | 40 | 60 |
| **Surlyn PC2000** | 90 | 80 | 70 | 60 | 40 | | | | | |
| **DPO AE1028** | | | | | | 90 | 80 | 70 | 60 | 40 |
| **Elongation at break (%)** | 109 | 128.8 | 155.1 | 166 | 178 | 112.5 | 114.9 | 95.4 | 137.5 | 136 |
| **Tensile Strength at Break (MPa)** | 35.2 | 35.1 | 41.1 | 45.2 | 50.9 | 37 | 39.5 | 38.2 | 43.1 | 53 |
| **E-modulus (MPa)** | 571 | 594.8 | 710.2 | 914.7 | 1335.9 | 654.1 | 747.1 | 836.5 | 861.3 | 1316.7 |

**Table 2**

| Sample | ionomer | Diameter after test (mm) | Diameter after 1 week (mm) | Δ after 1 week (mm) |
|---|---|---|---|---|
| B | PC2000 | 72.7 | 72.8 | 0.1 |
| C | | 73.9 | 74 | 0.1 |
| D | | 73.2 | 73.7 | 0.5 |
| E | | 74.5 | 74.6 | 0.1 |
| F | AE1028 | 72.8 | 72.4 | -0.4 |
| G | | 72.6 | 72.2 | -0.4 |
| H | | 73.5 | 73.3 | -0.2 |
| I | | 74.3 | 74 | -0.3 |
| J | | 74.8 | 74.4 | -0.4 |

## Claims

1. A shoe stiffener comprising
a) thermoformable polymer composition which comprises
a polyamide resin and an ionomer resin, wherein the thermoformable polymer composition comprises from 3 to 45 weight percent of polyamide resin and from 55 to 97 weight percent of an ionomer resin, the weight percent being based on the total weight of thermoformable polymer composition, and
b) a fibrous material.

2. The shoe stiffener of claim 1 wherein the thermoformable polymer composition is thermoformable at a temperature below or equal to 100°C.

3. The shoe stiffener of any preceding claims wherein the fibrous material is impregnated or partially impregnated with the thermoformable polymer composition.

4. The shoe stiffener of any preceding claims wherein the fibrous material is a non-woven fabric.

5. The shoe stiffener of any preceding claims wherein the ionomer resin is a copolymer of ethylene and between 10 and 20 weight percent of methacrylic acid neutralized with between 0.5 and 99% of metal ions selected from Zn, Na, Li or K or a mixture thereof.

6. The shoe stiffener of any of the preceding claims wherein the shoe stiffener is a heel counter.

7. The shoe stiffener of any of the preceding claims wherein the shoe stiffener is a toe puff.

8. A method for making a shoe stiffener according to any of the claims 1 to 7, the method comprising the steps of:
(a) providing a fibrous material,
(b) providing a thermoformable polymer composition comprising a polyamide resin and an ionomer resin as defined in claim 1,
(c) extruding the thermoformable polymer composition onto the fibrous material to obtain a composite sheet,
(d) cutting the composite sheet of step (c) into the desired shape and size to obtain a shoe stiffener.

9. The method according to claim 8, further comprising the step of applying heat and pressure to the shoe stiffener of step (d) to thermoform the shoe stiffener into the desired shape.

10. The method according to claim 9, wherein the shoe stiffener of step (d) is heated at a temperature below or equal to 100°C.

11. The method according to any of the claims 8 to 10, wherein the extrusion is made by extrusion coating.

12. A footwear comprising the shoe stiffener according to any of the claims 1 to 7.

## Patentansprüche

1. Eine Schuhkappe, beinhaltend
a) eine thermoformbare Polymerzusammensetzung, die ein Polyamidharz und ein lonomerharz beinhaltet, wobei die thermoformbare Polymerzusammensetzung zu 3 bis 45 Gewichtsprozent Polyamidharz und zu 55 bis 97 Gewichtsprozent ein lonomerharz beinhaltet, wobei das Gewichtsprozent auf das Gesamtgewicht der thermoformbaren Polymerzusammensetzung bezogen ist, und
b) ein Fasermaterial.

2. Schuhkappe gemäß Anspruch 1, wobei die thermoformbare Polymerzusammensetzung bei einer Temperatur unterhalb oder gleich 100 °C thermoformbar ist.

3. Schuhkappe gemäß einem vorhergehenden Anspruch, wobei das Fasermaterial mit der thermoformbaren Polymerzusammensetzung imprägniert oder teilweise imprägniert ist.

4. Schuhkappe gemäß einem vorhergehenden Anspruch, wobei das Fasermaterial ein Vliesstoff ist.

5. Schuhkappe gemäß einem vorhergehenden Anspruch, wobei das lonomerharz ein Copolymer von Ethylen und zwischen 10 und 20 Gewichtsprozent Methacrylsäure, neutralisiert mit zwischen 0,5 und 99 % Metallionen, ausgewählt aus Zn, Na, Li oder K oder einer Mischung davon, ist.

6. Schuhkappe gemäß einem vorhergehenden Anspruch, wobei die Schuhkappe eine Fersenkappe ist.

7. Schuhkappe gemäß einem vorhergehenden Anspruch, wobei die Schuhkappe eine Schuhspitze ist.

8. Verfahren zum Herstellen einer Schuhkappe gemäß einem der Ansprüche 1 bis 7, wobei das Verfahren die folgenden Schritte beinhaltet:
(a) Bereitstellen eines Fasermaterials,
(b) Bereitstellen einer thermoformbaren Polymerzusammensetzung, beinhaltend ein Polyamidharz und ein lonomerharz wie in Anspruch 1 definiert,
(c) Extrudieren der thermoformbaren Polymerzusammensetzung auf das Fasermaterial, um ein Verbundwerkstoffflächengebilde zu erhalten,
(d) Schneiden des Verbundwerkstoffflächengebildes von Schritt (c) in die gewünschte Form und Größe, um eine Schuhkappe zu erhalten.

9. Verfahren gemäß Anspruch 8, ferner beinhaltend den Schritt des Anwendens von Wärme und Druck auf die Schuhkappe von Schritt (d), um die Schuhkappe in die gewünschte Form zu thermoformen.

10. Verfahren gemäß Anspruch 9, wobei die Schuhkappe von Schritt (d) bei einer Temperatur unterhalb oder gleich 100 °C erwärmt wird.

11. Verfahren gemäß einem der Ansprüche 8 bis 10, wobei die Extrusion durch Extrusionsbeschichtung durchgeführt wird.

12. Ein Schuhwerk, beinhaltend die Schuhkappe gemäß einem der Ansprüche 1 bis 7.

## Revendications

1. Une pièce de soutien pour chaussure comprenant
a) une composition de polymère thermoformable qui comprend une résine polyamide et une résine ionomère, la composition de polymère thermoformable comprenant de 3 à 45 pour cent en poids de résine polyamide et de 55 à 97 pour cent en poids d'une résine ionomère, le pourcentage en poids étant rapporté au poids total de composition de polymère thermoformable, et
b) une matière fibreuse.

2. La pièce de soutien pour chaussure de la revendication 1 dans laquelle la composition de polymère thermoformable est thermoformable à une température inférieure ou égale à 100 °C.

3. La pièce de soutien pour chaussure de n'importe quelles revendications précédentes dans laquelle la matière fibreuse est imprégnée ou partiellement imprégnée de la composition de polymère thermoformable.

4. La pièce de soutien pour chaussure de n'importe quelles revendications précédentes dans laquelle la matière fibreuse est un tissu non tissé.

5. La pièce de soutien pour chaussure de n'importe quelles revendications précédentes dans laquelle la résine ionomère est un copolymère d'éthylène et entre 10 et 20 pour cent en poids d'acide méthacrylique neutralisé avec entre 0,5 et 99 % d'ions métalliques sélectionnés parmi Zn, Na, Li ou K ou un mélange de ceux-ci.

6. La pièce de soutien pour chaussure de n'importe lesquelles des revendications précédentes, la pièce de soutien pour chaussure étant un contrefort.

7. La pièce de soutien pour chaussure de n'importe lesquelles des revendications précédentes, la pièce de soutien pour chaussure étant un bout.

8. Une méthode pour la fabrication d'une pièce de soutien pour chaussure selon n'importe lesquelles des revendications 1 à 7, la méthode comprenant les étapes consistant à :
(a) fournir une matière fibreuse,
(b) fournir une composition de polymère thermoformable comprenant une résine polyamide et une résine ionomère tel que défini dans la revendication 1,
(c) extruder la composition de polymère thermoformable sur la matière fibreuse afin d'obtenir une feuille composite,
(d) couper la feuille composite de l'étape (c) selon la conformation et la taille souhaitées afin d'obtenir une pièce de soutien pour chaussure.

9. La méthode selon la revendication 8, comprenant en outre l'étape consistant à appliquer chaleur et pression sur la pièce de soutien pour chaussure de l'étape (d) afin de thermoformer la pièce de soutien pour chaussure selon la conformation souhaitée.

10. La méthode selon la revendication 9, dans laquelle la pièce de soutien pour chaussure de l'étape (d) est chauffée à une température inférieure ou égale à 100 °C.

11. La méthode selon n'importe lesquelles des revendications 8 à 10, dans laquelle l'extrusion est réalisée par couchage par extrusion.

12. Un article chaussant comprenant la pièce de soutien pour chaussure selon n'importe lesquelles des revendications 1 à 7.
